# EUROPEAN PATENT APPLICATION

(11) **EP 2 157 636 A1**
(43) Date of publication of application: **24.02.2010**
(21) Application number: 09166744.4
(22) Date of filing: 29.07.2009
(51) Int. Cl.: H01M 2/20, H01M 2/28, H01M 2/30, H01M 10/42, H01M 10/48

(54) **Storage battery terminal having test surface**

(30) Priority: 30.07.2008 US 182223
(71) Applicant: C & D Technologies, Inc., Blue Bell, PA 19422-0528 (US)
(72) Inventor: Bielawski, Matthew, MILWAUKEE, WI WI 53202 (US); Inkmann, Mark, WAUWATOSA, WI WI 53226 (US); Jergl, Joseph, LANSDALE, PA PA 19446 (US); Pfeifer, Guy, MILWAUKEE, WI WI 53225 (US); Searl, Jason, Lafayette Hill, PA 19444 (US); Thuerk, David, BROOKFIELD, WI WI 53005 (US); Witteman, Robert, Warrington, PA PA 18976 (US)
(74) Representative: Houben, Christiaan Hein Willem Frans

(57) **Abstract**

A storage battery includes a battery case having opposed side walls and a top wall. A battery terminal extends from one of the walls. The battery terminal includes a projecting portion for accommodating termination hardware in mechanical and electrical engagement The projecting portion of the battery terminal includes a test surface portion externally accessible from the termination hardware for directly accommodating a testing device.

## Description

### FIELD OF THE INVENTION:

The present invention relates generally to a storage battery terminal having a test surface More particularly, the present invention relates to a battery terminal having an accessible surface available for accommodating an externally applied test device.

### BACKGROUND OF THE INVENTION:

Storage batteries such as lead acid storage batteries are used in a variety of' applications, particularly for standby power. A typical storage battery includes battery cells housed in a battery case which are electrically accessible through a terminal mounted to either the top or sides of the case Connection is made to the battery terminal by connection hardware which may be attached to cables or other type of connecting components. Such connection hardware may include lugs, bus bars or the like.

In a proper battery maintenance program, it is necessary to test the battery to confirm voltage, ohmic data and micro-ohmic connection resistances. Typically, such testing is done by placing a test probe or other testing device in electrical engagement with the battery through the battery terminal However, in many applications, the lug bus bar or other connection hardware used to connect to the battery hinders access to the terminal itself. This results in measurements being taken through the connecting hardware by attachment of the test probe thereto. This creates certain issues with the inability to obtain micro-ohmic connection resistance to ensure connection integrity and unreliable ohmic diagnostic readings on the battery It has been found that testing in this manner may result in inaccurate readings and non-consistent readings inasmuch as the test probe may be attached to different locations of the hardware attached to the terminal

In a proper maintenance program it is desirable that a battery terminal allows direct and repeated access to the terminal itself for testing and measurement purposes.

### SUMMARY OF THE INVENTION:

The present invention provides a battery including a battery case having perimetrical side walls and a top wall A battery terminal extends from one of the walls. The terminal has a projecting portion for accommodating terminal hardware in mechanical and electrical engagement. A portion of the terminal remains externally accessible from the termination hardware so as to accommodate a testing device.

The present invention further provides a combination of an electrical storage battery and a test device for electrically engaging the storage battery. The combination includes a battery case having side walls and a top wall A battery terminal extends from one of the walls A connecting device is attached to the terminal. The battery terminal has an exposedlocation adjacent the connecting device. The test probe may include contacting members which are engageable with the exposed location for direct contact therewith.

In one embodiment of'the present invention, the test probe may have spring actuatable jaws which engage a recess surface on the terminal.

In another embodiment, the test probe may include test points extending therefrom for direct engagement with an exposed annular surface of the terminal

### BRIEF DESCRIPTION OF THE DRAWINGS:

Figure 1 shows a typical storage battery having a battery terminal constructed in accordance with the preset invention for use with a probe,

Figure 2 is an enlarged cross-section showing of a portion of the battery of Figure 1 including an improved terminal of the present invention having the probe attached thereto

Figure 3 shows a probe design used in combination with the terminal of Figures 1 and 2

Figure 4 shows a portion of the probe of Figure 3.

Figure 5 shows the battery of Figure 1 with the probe attached to a terminal beneath a bus bar.

Figure 6 shows a further embodiment of a battery terminal of the present invention extending from a wall of the battery

Figure 7 is a perspective showing of the battery terminal of Figure 5 with a connection bus bar attached thereto.

Figure 8 is a top plan view of the battery terminal of Figure 6.

Figure 9 is as sectional showing of the battery terminal of Figure 7 taken through the lines A-A thereof

Figures 10 and 11 show the battery terminal and bus bar combination of Figure 6 with a ohmic/micro-ohmic test probe in electrical engagement therewith

### DETAILED DESCRIPTION OF THE PREFERRED EMBODIMENTS:

The present invention is directed to a storage battery, including a battery terminal extending therefrom, which allows attachment of a testing device such as a test probe to mechanically and electrically connect to the battery terminal directly without having to contact any of the connecting hardware attached thereto, Quite often when terminating to a battery terminal, the connecting hardware such as connectors, lugs, bus bars and the like, block direct access to the terminal. This results in the need to take test measurements such as ohmic and voltage measurements through the attached hardware, Often times this results in inaccurate or non-uniform readings.

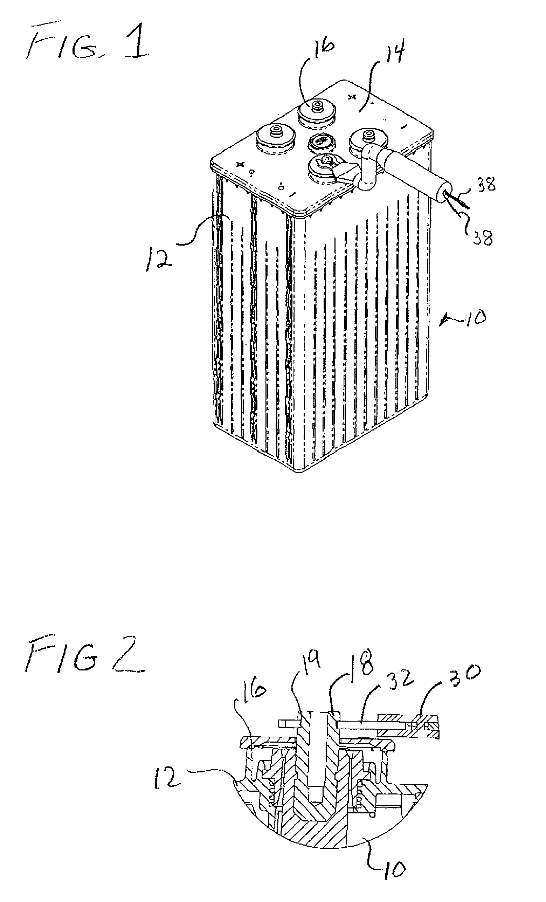

Referring to Figures 1-5, a first embodiment of'the improved battery terminal of' the present invention is shown Referring to Figures 1 and 2, the battery 10 may be a conventional 12 volt industrial battery having a plurality of cells (not shown) housed within a case 12 covered by a top cover 14. A plurality of terminals 16, typically including positive and negative terminals extend from the upper surface or cover 14 of battery 10. While the terminals 16 are shown extending from cover 14, it may be appreciated that the terminal may extend from any surface of the battery including a side surface As is well known, the terminals are electrically connected to the cells contained within the battery.

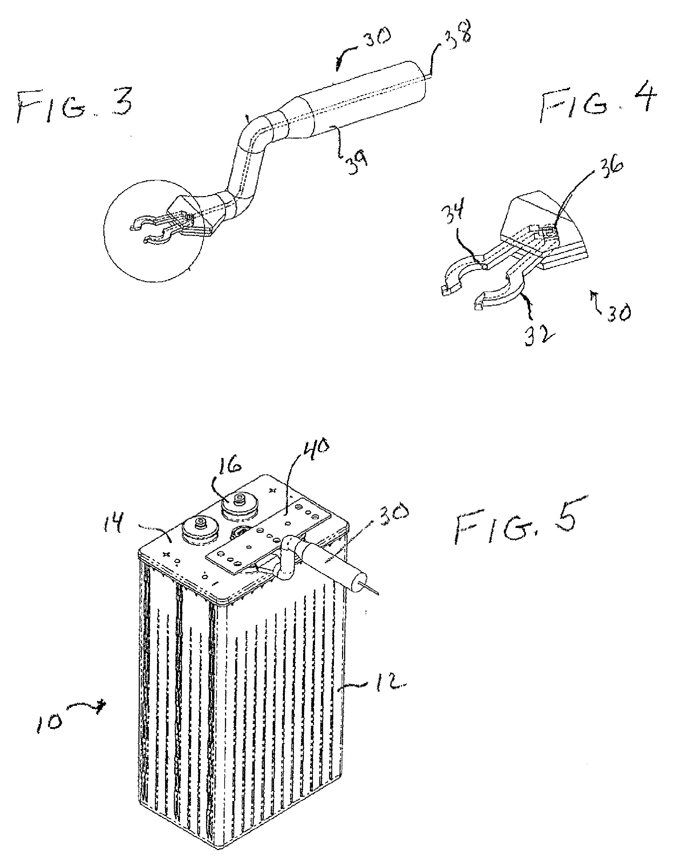

As shown additionally and in more detail in Figures 3 and 4, a probe 30 may be employed to contact battery terminal 16 directly without having to contact any securement hardware (such as a bus bar 40 shown in Figure 5) The probe 30 is a clamp-type member formed generally of electrically conductive material having a pair of actuatable spring-biased jaws 32 and 34 pivotally movable about a torsion spring 36 between an opened and closed position This allows it to snap on to the terminal, eliminating the need for two people for both reading and recording of data. The jaws 32 and 34 are connected to two separate electrical wires 38 which are connected to a test apparatus. The wires 38 and a portion of'the jaws 32 and 34 are covered by an insulative cover/handle 39.

Referring additionally to Figure 2, the terminal 16 includes an upstanding extending member 18, which is generally cylindrical, and has adjacent its upper end an annular recess or undercut 19 The upstanding extending member is also formed of an electrically conductive material. The jaws 32 and 34 of probe 30 are spring loaded to fit around upstanding member 18 and then be actuatably closed to seat within the annular recess 19, Such an arrangement provides secure mechanical and electrical engagement between the jaw of probe 30 and the terminal 16 Such direct engagement is achieved with the terminal 16 without need to engage various securement hardware which may be placed on the terminals. For example, with reference to Figure 5, it is often required that a bus bar 40 be placed across the upper extent of the terminals This would ordinarily block access to the terminal for test purposes

As can be appreciated from the depiction in Figure 5, the terminals are constructed so that the probe 30 may engage the upstanding member 18 as shown in Figure 2 even with the bus bar 40 in place Thus, when the terminals are covered by securement hardware such as bus bar 40, direct electrical engagement can be made with the terminal itself without having to make electrical connection to the bus bar This increases the accuracy and uniformity of any testing conducted using probe 30

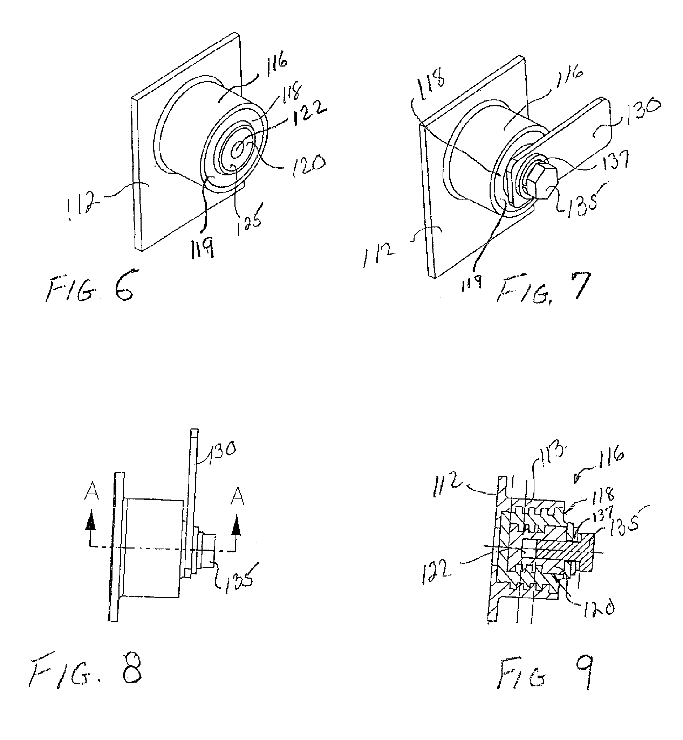

Referring now to Figures 6-11, a further embodiment of the present invention is shown. A wall 112 of a battery case may include terminal 116 extending therefrom In the present illustrative embodiment, wall 112 may represent the side wall of a battery case As particularly shown in Figure 7, terminal 116 may be formed of an electrically conductive bushing 118 having supported therein an electrically conductive insert 120. The bushing 118 may be molded about insert 120. Typically, the bushing 118 would be formed of lead and the insert 120 would be formed of brass. The subassembly of'the bushing 118 and insert 120 is molded within an annular extending portion 113 of wall 112. While the construction and formation of terminal 116 may be achieved in a conventional manner, the specific terminal shown herein is of the type more fully shown and described in copending application Serial No. , filed entitled "A BATTERY WITH A MOLDED FRONT IERMINAL", bearing Attorney Docket No. 1161-99 This disclosure is incorporated by reference herein for all purposes.

As shown in Figures 7-9, battery terminal 116 has electrically and mechanically connected thereto a bus bar 130. Bus bar 130 is representative of typical attachment hardware which may be attached to the terminal Other similar connection hardware may also be employed. The bus bar 130 has a central aperture therethrough which is alignable with the threaded aperture 122 in insert 120. This allows threaded insertion of bolt 135 therethrough to secure, in mechanical and electrical engagement bus bar 130 to terminal 116. A conductive washer 137 and lock washer (not shown) may also optionally be interposed between bolt 135 and bus bar 130

As shown in Figure 6, bushing 118 defines an annular surface 119 about an extending portion 125 of insert 120. As will be described in further detail hereinbelow, annular surface 119 provides a contacting surface so that a test probe may electrically connect directly to the terminal bypassing bus bar 130 The annular surface 119 extends radially outwardly from the center of'the terminal 116 a sufficient distance that it is not fully covered by bas bar 130 Thus, as can be clearly seen in Figure 7, even with bus bar 130 attached to terminal 116, annular surface 119 is exposed for direct engagement.

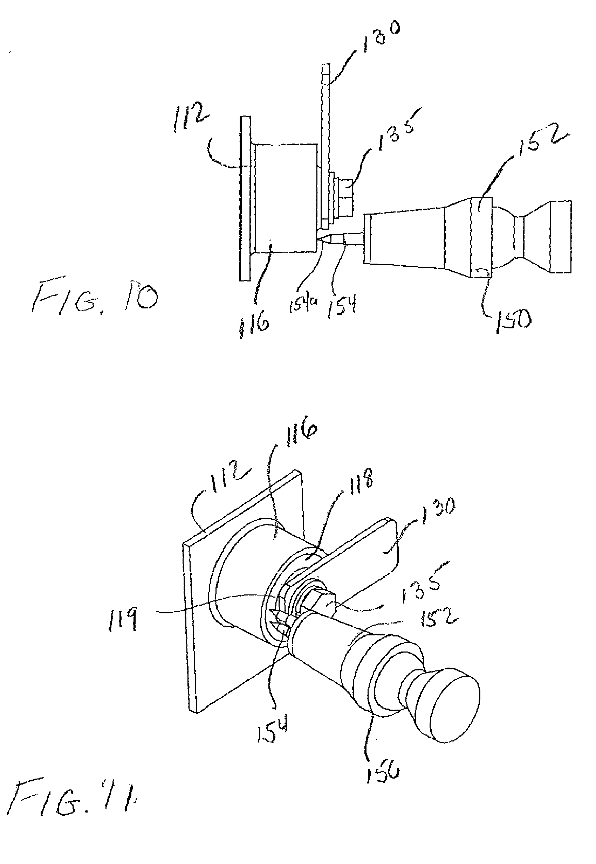

Referring now to Figures 10 and 11, the use of terminal 116 for testing purposes may be shown. A test probe 150 has a body 152 and a pair of electrically conductive probe tips 154 extending therefrom Probe tips 154 include pointed extents 154a which help assure electrical contact with surface 119 even if there exist some corrosion on the surface As can be appreciated from the depictions in Figures 10 and 11, annular surface 119 is exposed about a substantial arc thereof which permits easy direct contact of the probe tips 154 therewith. Such surface engagement between the probe tips 154 and surface 119 permits direct contact with the terminal 116 without need to make engagement through the bus bar 130 or bolt 135. This provides a higher degree of reliability, accuracy and consistency when making probe measurements This allows for the ability to obtain connection resistance measurements which is not possible on many of the front access terminal designs in the market today.

Various changes to the foregoing described and shown structures would now be evident to those skilled in the art. Accordingly, the particularly disclosed scope of the invention is set forth in the following claims.

## Claims

1. A storage battery comprising:
a battery case having opposed sides and end and top walls; and
a battery terminal extending from one of said walls said terminal having a projecting portion for accommodating termination hardware in mechanical and electrical engagement;
said projecting potion having a test surface portion externally accessible from said termination hardware for directly electrically accommodating a testing device.

2. A storage battery of claim 1 wherein said terminal includes a threaded aperture for securing said termination hardware thereto and an annular surface therearound defining said test surface

3. A storage battery of claim 1 wherein said projection portion has an annular recessed surface for accommodating said testing device.

4. A storage battery of claim 1 wherein said terminal extends from said top wall.

5. A storage battery of claim 1 wherein said terminal extends from one of said side walls

6. In combination, an electrical storage battery and a test device for electrical engagement with said storage battery, said combination comprising:
a battery case having side walls and a top wall;
a battery terminal extending from one of said walls;
a connecting device attached to said terminal;
said battery terminal having an exposed location adjacent said connecting device; and
a test probe housing having contacting members, said contacting members being engageable with said exposed location for direct contact therewith

7. The combination of claim 6 wherein said terminal includes an extending member having an annular recess spaced from the upper end thereof defining saidexposed location

8. The combination of claim 7 wherein said test probe includes spring biased opposed actuable jaws defining said contacting members, said jaws being seatable within said annular recess.

9. The combination of claim 6 wherein said terminal includes an upper surface defining an aperture for receipt of termination hardware for securing said connecting device thereto.

10. The combination of claim 9 wherein said upper surface of said terminal deviceincludes an annular surface, a portion of which defines said exposed location.

11. The combination of claim 10 wherein said test probe includes a pair of test contacts having pointed ends for direct engagement with said annular surface
